# EUROPÄISCHE PATENTANMELDUNG

(11) **EP 3 833 052 A1**
(43) Veröffentlichungstag der Anmeldung: **09.06.2021**
(21) Anmeldenummer: 20207333.4
(22) Anmeldetag: 12.11.2020
(51) Int. Cl.: H04R 25/00, G06K 9/00, G06K 9/62

(54) **VERFAHREN ZUM TRAINIEREN EINES HÖRSITUATIONEN-KLASSIFIKATORS FÜR EIN HÖRGERÄT**

(30) Priorität: 03.12.2019 DE 102019218808
(71) Anmelder: Sivantos Pte. Ltd., Singapore 539775 (SG)
(72) Erfinder: SCHÖN, Sven, 91058 Erlangen (DE); KUKLA, Christoph, 92724 Trabitz (DE); BOLLMANN, Andreas, 91056 Erlangen (DE)
(74) Vertreter: FDST Patentanwälte

(57) **Zusammenfassung**

Bei einem erfindungsgemäßen Verfahren zum Trainieren eines Hörsituationen-Klassifikators für ein Hörgerät (3) werden mittels eines Endgeräts (3,4) einem Nutzer eine Anzahl von akustischen Signalen dargeboten, der Nutzer aufgefordert, zu dem oder dem jeweiligen dargebotenen Signal eine Angabe zur Signalquelle zu tätigen, und in Abhängigkeit von der nutzerseitigen Angabe zu dem dargebotenen Signal oder einem der gegebenenfalls mehreren dargebotenen Signale Trainingsdaten für den Hörsituationen-Klassifikator angepasst und der Hörsituationen-Klassifikator mittels der Trainingsdaten aktualisiert.

## Beschreibung

Die Erfindung betrifft ein Verfahren zum Trainieren eines Hörsituationen-Klassifikators für ein Hörgerät. Des Weiteren betrifft die Erfindung ein Hörsystem, das insbesondere dazu eingerichtet ist, das vorstehend genannte Verfahren durchzuführen.

Hörgeräte dienen insbesondere in Form von Hörhilfegeräten Personen mit einer Hörminderung dazu, die Hörminderung zumindest teilweise auszugleichen. Dazu umfassen übliche Hörgeräte regelmäßig wenigstens ein Mikrofon zur Erfassung von Geräuschen aus der Umgebung sowie einen Signalverarbeitungs-Prozessor, der dazu dient, die erfassten Geräusche zu verarbeiten und dabei insbesondere in Abhängigkeit von der individuellen Hörminderung (insbesondere frequenzspezifisch) zu verstärken und/oder zu dämpfen. Die verarbeiteten Mikrofonsignale werden von dem Signalverarbeitungs-Prozessor an einem Ausgabewandler - meist in Form eines Lautsprechers - zur Ausgabe an das Gehör des jeweiligen Hörgeräteträgers weitergeleitet. Je nach Art der Hörminderung kommen als Ausgabewandler auch sogenannte Knochenleitungshörer oder Cochlea-Implantate zur mechanischen bzw. elektrischen Stimulation des Gehörs zum Einsatz. Unter den Begriff Hörgerät werden aber auch andere Geräte wie beispielsweise Kopfhörer, sogenannte Tinnitus-Masker oder Headsets zusammengefasst.

Insbesondere Hörhilfegeräte weisen häufig einen sogenannten Hörsituationen-Klassifikator (kurz: Klassifikator) auf, der dazu dient, insbesondere anhand der erfassten Geräusche auf das Vorliegen einer bestimmten, vordefinierten "Hörsituation" zu schließen. Solche Hörsituationen zeichnen sich dabei meist durch ein spezifisches Signal-Rausch-Verhältnis, das Vorhandensein von Sprache, eine vergleichsweise hohe Tonalität und/oder dergleichen aus. In Abhängigkeit von der erkannten Hörsituation wird dann regelmäßig die Signalverarbeitung verändert. Bspw. ist für eine Situation, in der der Hörgeräteträger mit nur einer Person spricht, eine schmale Richtwirkung eines Richtmikrofons erforderlich, wohingegen in freier Natur ohne Gespräch eine omnidirektionale Richtwirkung vorteilhaft sein kann. Zur Erkennung einer Gesprächssituation wird in dem Klassifikator häufig ein Spracherkennungsalgorithmus abgearbeitet.

Klassifikatoren werden außerdem üblicherweise mittels einer Datenbank, auf der bspw. für spezifische Hörsituationen bekannte Hörbeispiele hinterlegt sind, "trainiert" (oder programmiert), um im bestimmungsgemäßen Betrieb möglichst viele akustische Situationen jeweils der richtigen Hörsituation zuordnen zu können. Dennoch kann es dazu kommen, dass ein Klassifikator eine akustische Situation (zumindest subjektiv für den Hörgeräteträger) falsch einordnet oder gar nicht einordnen kann. In diesem Fall erfolgt dann möglicherweise eine für den Hörgeräteträger nicht zufriedenstellende Signalverarbeitung.

Der Erfindung liegt die Aufgabe zugrunde, eine bessere Zuordnung einer Hörsituation zu einer akustischen Situation zu ermöglichen.

Diese Aufgabe wird erfindungsgemäße gelöst durch ein Verfahren mit den Merkmalen des Anspruchs 1. Des Weiteren wird diese Aufgabe erfindungsgemäß gelöst durch ein Hörsystem mit den Merkmalen des Anspruchs 15. Vorteilhafte und teils für sich erfinderische Ausführungsformen und Weiterbildungen der Erfindung sind in den Unteransprüchen und der nachfolgenden Beschreibung dargelegt.

Das erfindungsgemäße Verfahren dient zum Trainieren eines Hörsituationen-Klassifikators (kurz: "Klassifikator") für ein Hörgerät, insbesondere ein Hörhilfegerät. Verfahrensgemäß wird dabei mittels eines Endgeräts einem Nutzer (insbesondere dieses Endgeräts) eine Anzahl von akustischen Signalen dargeboten. Der Nutzer wird dann aufgefordert, zu dem oder dem jeweiligen dargebotenen Signal eine Angabe zur Signalquelle zu tätigen. Insbesondere für den Fall, dass mehrere akustische Signale dargeboten werden, wird vorzugsweise nach jeder einzelnen Darbietung der Nutzer entsprechend aufgefordert seine Angabe zu tätigen, bevor die nächste Darbietung erfolgt. In Abhängigkeit von der nutzerseitigen Angabe zu dem dargebotenen Signal oder einem der gegebenenfalls mehreren dargebotenen Signale werden Trainingsdaten für den Hörsituationen-Klassifikator angepasst und der Hörsituationen-Klassifikator mittels der (insbesondere der angepassten) Trainingsdaten aktualisiert.

Das erfindungsgemäße Hörsystem ist dazu eingerichtet, das hier und im Folgenden beschriebene Verfahren (vorzugsweise automatisch, d. h. selbsttätig, insbesondere aber auch in Interaktion mit dem Nutzer) durchzuführen. Das Hörsystem umfasst dabei wenigstens ein Endgerät der vorstehend genannten Art, den Klassifikator, der vorzugsweise durch einen Algorithmus, insbesondere ein neuronales Netz, eine selbstlernende Software oder dergleichen gebildet ist, und einen Controller. Der Controller dient vorzugsweise zumindest zur Ausführung von Teilen (bspw. der Anpassung der Trainingsdaten) des Verfahrens.

Vorzugsweise handelt es sich bei dem Nutzer um den Nutzer des Hörgeräts, im Folgenden auch als Hörgeräteträger bezeichnet.

Dadurch, dass ein Nutzer (zumindest mittelbar) in das Training des Klassifikators mit einbezogen wird, kann vorteilhafterweise auf Wissen und Erfahrungen zurückgegriffen werden, die potentiell über üblicherweise in einer Trainingsdatenbank hinterlegte Trainingsdaten für den Klassifikator hinausgehen. Zudem wird dadurch ermöglicht, den Klassifikator auch fortlaufend weiter zu verbessern, also insbesondere immer weiter zu trainieren, so dass die durch den Klassifikator erzielten Ergebnisse genauer werden können.

Dem Verfahren und dem Hörsystem kommen somit die gleichen, hier und im Folgenden beschriebenen Vorteile zu. Gleichermaßen bedient sich das Verfahren vorzugsweise auch der durch das Hörsystem bereitgestellten körperlichen Merkmale und/oder sonstigen von diesem bereitgestellten Daten.

Bei dem Endgerät handelt es sich vorzugsweise um ein mobiles Gerät, das einen zugeordneten Prozessor sowie vorzugsweise auch eine Schnittstelle zu einem (optional mobilen) Datennetzwerk aufweist. In einer Variante handelt es sich bei dem Endgerät dabei um das Hörgerät (insbesondere das Hörhilfegerät des Hörgeräteträgers), das vorzugsweise eine Drahtlosschnittstelle zur Einbindung in ein (optional mobiles) Datennetzwerk oder zumindest zur Verbindung mit einem mit einem solchen Datennetzwerk in Verbindung stehenden Zwischengerät, bspw. einem Smartphone, einem Tablet, einer Smartwatch, einem Laptop oder dergleichen aufweist. In einer bevorzugten Variante handelt es sich bei dem Endgerät aber um ein solches Zwischengerät, insbesondere um ein Smartphone, ein Tablet oder dergleichen. Insbesondere in letzterem Fall kann der Nutzer auch unabhängig vom Hörgeräteträger sein, bspw. also selbst gar kein Hörgerät nutzen. Grundsätzlich kann es sich bei dem Nutzer aber auch um einen Hörgeräteträger handeln.

Die akustische Darbietung des jeweiligen Signals erfolgt dabei über einen Lautsprecher oder sonstigen Ausgangswandler des Hörgeräts - optional gesteuert durch das das Endgerät bildende Zwischengerät (also bspw. durch das Smartphone) - oder durch das Endgerät selbst (insbesondere also durch einen Lautsprecher des Smartphones etc.). Vorzugsweise erfolgt die Angabe in letzterem Fall durch eine manuelle Eingabe durch den Nutzer, bspw. auf einem berührungssensitiven Bildschirm des Smartphones etc. Alternativ erfolgt die Angabe - gegebenenfalls auch in letzterem Fall - als Spracheingabe. In diesem Fall kann optional das Endgerät auch durch einen digitalen Assistenten gebildet sein, der zur Sprachsteuerung durch den Nutzer eingerichtet und vorgesehen ist.

In einer bevorzugten Verfahrensvariante bildet das dargebotene Signal oder eines der gegebenenfalls mehreren dargebotenen Signale ein charakteristisches Signal für eine für den Klassifikator unbekannte akustische Situation. Anders ausgedrückt ist das dargebotene Signal (oder zumindest eines von gegebenenfalls mehreren) charakteristisch für eine solche unbekannte akustische Situation. Unter dem Begriff "unbekannt" wird in diesem Zusammenhang hier und im Folgenden insbesondere verstanden, dass der Klassifikator dieser akustischen Situation keine bekannte, insbesondere trainierte Hörsituation zuordnen kann oder eine Hörsituation zugeordnet hat, die aufgrund der damit verbundenen Signalverarbeitungseinstellungen für den oder wenigstens einen Nutzer (insbesondere einen von optional mehreren Hörgeräteträgern) zu einem nicht zufriedenstellenden Höreindruck führt. In diesem Fall kann also die Angabe des Nutzers (optional also des Hörgeräteträgers) zu diesem für die unbekannte akustische Situation charakteristischen Signal vorteilhafterweise genutzt werden, um die Trainingsdaten für den Klassifikator so anzupassen, dass zukünftig die gleiche oder vorzugsweise auch eine vergleichbare akustische Situation erkannt oder mit hinreichender Präzision zugeordnet werden kann.

In einer bevorzugten Weiterbildung der vorstehenden Verfahrensvariante wird nur die Nutzer-Angabe zu einem solchen für eine unbekannte akustische Situation charakteristischen Signal zur Anpassung der Trainingsdaten herangezogen. Angaben zu Signalen, die bekannten Signalquellen oder akustischen Situation zugeordnet sind, werden dagegen vorzugsweise nicht zur Veränderung der Trainingsdaten berücksichtigt.

In einer besonders zweckmäßigen Verfahrensvariante umfasst das für die unbekannte Hörsituation charakteristische Signal eine Aufnahme einer realen (akustischen) Situation. Bevorzugt ist dieses Signal dabei durch eine solche Aufnahme gebildet. Dadurch kann der Klassifikator vorteilhafterweise an reale Situationen, die bisher (noch) nicht in den Trainingsdaten abgebildet oder enthalten sind, angepasst werden.

In einer bevorzugten Weiterbildung wird die vorstehend beschriebene Aufnahme der realen (akustischen) Situation vorgenommen, wenn zumindest ein Hörgeräteträger eine für eine Unzufriedenheit mit einer durch den Klassifikator vorgenommenen Einstellung charakteristische Eingabe tätigt und/oder wenn der Klassifikator der realen (akustischen) Situation nur mit einem einen Grenzwert unterschreitenden Wahrscheinlichkeitswert eine trainierte (also bekannte) Hörsituation zuordnen kann. Als charakteristische Eingabe wird dabei insbesondere eine nach einer (insbesondere durch das Hörgerät selbst automatisch aufgrund des Klassifikation erfolgten) Änderung der Signalverarbeitungseinstellungen vorgenommenen nutzerseitige Änderung bspw. von Lautstärke oder ein manuelles Umschalten von "Programmen" (also insbesondere ein Umschalten auf einer anderen Hörsituation zugeordnete Signalverarbeitungseinstellungen) aufgefasst. Zusätzlich kann eine solche Eingabe auch auf einer Fernsteuerung für das Hörgerät, bspw. in einer zugeordneten, bspw. auf einem Smartphone installierten Steuerungsapplikation erfolgen. Zusätzlich oder alternativ ist der Klassifikator dazu eingerichtet, bei der Klassifikation einen Wahrscheinlichkeitswert dafür zu erstellen, mit welcher Wahrscheinlichkeit die aktuelle akustische Situation einer bekannten Hörsituation entspricht. Zusätzlich oder weiterhin alternativ kann die Aufnahme der aktuellen akustischen Situation auch durch eine weitere (dritte) Person, bspw. einen Audiologen oder dergleichen, insbesondere mittels einer Art Fernzugriff gestartet werden.

Vorzugsweise wird die Aufnahme mittels wenigstens eines von optional mehreren Mikrofonen des Hörgeräts oder des gegebenenfalls vorhandenen anderen Endgeräts (bspw. des Smartphones etc.) vorgenommen.

Insbesondere im Fall der ersten beiden Varianten der Einleitung der Aufnahme (auf eine Eingabe durch den Hörgeräteträger hin und/oder automatisch aufgrund einer potentiell fehlerhaften Klassifikation) werden in einer zweckmäßigen Verfahrensvariante fortlaufend, insbesondere gleitend Aufnahmen über vorgegebene "Sample"- oder "Snippet"-Dauern hinweg mittels wenigstens der optional mehreren Mikrofone des Hörgeräts erstellt (und vorzugsweise zwischengespeichert) und nur dann für die weitere Verwendung gespeichert, wenn eines der beiden vorstehenden Ereignisse zur Einleitung der Aufnahme vorliegt. Dies hat den Vorteil, dass bei Einleitung der Aufnahme unter Umständen bereits ein Großteil von Schalleindrücken (insbesondere Geräuschen), die zur gegebenenfalls (zumindest subjektiven) Fehlklassifikation (oder zu einer Nicht-Erkennung) führen, bereits nicht mehr hörbar sein könnten. Für einen solchen Fall wird somit die Wahrscheinlichkeit erhöht, dass entsprechende Geräusche in der Aufnahme bei Einleitung dieser enthalten sind. Für den Fall, dass die Aufnahme nicht eingeleitet wird, werden die vorausgehenden Aufnahmen (insbesondere die zwischengespeicherten) zweckmäßigerweise verworfen, vorzugsweise dauerhaft.

In einer zweckmäßigen Verfahrensvariante wird das für die unbekannte akustische Situation charakteristische Signal, also insbesondere die vorstehend beschrieben Aufnahme der realen (akustischen) Situation in einer zentralen Datenbank (bspw. einer durch einen Cloud-Service bereitgestellten Datenbank) hinterlegt und von dieser zentralen Datenbank aus zur Darbietung insbesondere an das jeweilige Endgerät bereitgestellt. Dadurch wird vorteilhafterweise auf einfache Weise ermöglicht, dass mehreren Nutzern die gleichen, konkret dieselben Signale dargeboten werden können.

In einer weiteren zweckmäßigen Verfahrensvariante wird die unbekannte akustische Situation auf die durch den Nutzer getätigte Angabe zur Signalquelle hin als bekannte Hörsituation, insbesondere konkret als Beispiel für eine bekannte Hörsituation, optional auch als "neu generierte" Hörsituation in die Trainingsdaten eingefügt.

Um die Wahrscheinlichkeit zu erhöhen, dass es sich bei der unbekannten akustischen Situation um eine spezifische Hörsituation handelt, wird in einer vorteilhaften Weiterbildung der vorstehenden Verfahrensvariante das für die unbekannte Hörsituation charakteristische Signal einer Vielzahl von Nutzern (bspw. Hörgeräteträgern) dargeboten und die unbekannte akustische Situation erst dann als bekannte Hörsituation (bzw. als Beispiel für eine solche) in die Trainingsdaten eingefügt, wenn eine vorgegebene Mehrzahl von Nutzern (bspw. ein Prozentsatz oder eine konkrete Zahl der Nutzer, denen dieses Signal dargeboten wurde) eine übereinstimmende Angabe zur Signalquelle dieses Signals getätigt hat. Mithin ist es vorteilhafterweise für die "Registrierung" der unbekannten akustischen Situation zu einer bekannten Hörsituation in den Trainingsdaten erforderlich, dass nicht nur ein sondern mehrere Hörgeräteträger diese akustische Situation gleich identifizieren (insbesondere die gleiche Signalquelle zuordnen).

In einer zweckmäßigen Verfahrensvariante wird dem oder dem jeweiligen Nutzer eine Vielzahl von akustischen Signalen von bekannten Signalquellen dargeboten und anhand der Angaben dieses Nutzers zu der dem jeweiligen Signal zugeordneten Signalquelle, insbesondere anhand der Richtigkeit seiner Angaben ein Eignungswert ermittelt. Das für die unbekannte Hörsituation charakteristische Signal wird dem Nutzer in diesem Fall vorzugsweise nur dann dargeboten, wenn der für diesen Nutzer ermittelte Eignungswert einen vorgegebenen Wert überschreitet. Dadurch wird vorteilhafterweise ermöglicht, dass nur Nutzer, die bekannte akustische Situationen mit hoher Verlässlichkeit den "richtigen" Signalquellen zuordnen, eine Angabe zu der unbekannten akustischen Situation tätigen. Dadurch kann wiederum die Wahrscheinlichkeit einer möglichst realitätsnahen Zuordnung der unbekannten akustischen Situation zu einer Signalquelle (die auch mehrere Einzel-Quellen umfassen kann; bspw. ein Geräusch eines elektrischen Geräts eingebettet in Naturgeräusche oder dergleichen) erhöht werden.

Vorzugsweise wird die vorstehend beschriebene "Bewertung" des jeweiligen Nutzers hinsichtlich seiner Eignung mittels sogenannter Gamifikation ermittelt. Insbesondere werden dabei Elemente, die Nutzern aus Spielen bekannt sind (insbesondere eine Art Belohnungssystem), herangezogen, vorzugsweise um die Motivation des Nutzers zur Teilnahme durch verschiedene Anreize zu erhöhen. Beispielsweise werden dem Nutzer bspw. im Rahmen eines Hörtest-, Hör-Trainings-Programms oder eines Spiels (das bspw. vom Hörgerätehersteller als Software-Applikation für ein Smartphone oder einen digitalen Assistenten der vorstehend genannten Art des Nutzers, insb. Hörgeräteträgers bereitgestellt wird) zunächst vergleichsweise einfach zu erkennende akustische Signale dargeboten, die der Nutzer einer Signalquelle zuordnen muss, insbesondere indem er aus einer dargebotenen Liste von Signalquellen auswählt. Zu Beginn des Programms, insbesondere in einer "Anfänger-Ebene" oder einem "-Level", sind die "Abstände" (d. h. insbesondere also die Unterscheide) der parallel zur "richtigen" Signalquelle zur Auswahl angebotenen Signalquellen vergleichsweise groß. Bspw. wird das Geräusch einer Trommel vorgespielt und neben der Trommel als weitere Auswahlmöglichkeiten ein Klavier, eine Flöte und eine Gitarre angeboten. Wählt der Nutzer (dieses Hörbeispiel oder einen Prozentsatz von mehreren Hörbeispielen) richtig, werden in jeweils "höheren Levels" der Abstand der weiteren Auswahlmöglichkeiten zur richtigen Lösung und/oder die Komplexität des dargebotenen Signals erhöht. Bspw. werden bei dem vorgespielten Geräusch einer Marsch-Trommel eine Pauke, eine Konga und Bongos als weitere Auswahlmöglichkeiten angeboten. Alternativ zu einzelnen Instrumenten können auch - insbesondere in "höheren" Ebenen oder Levels - komplexe Geräusche, bspw. Verkehrsgeräusche mit unterschiedlichen "Zusätzen", bspw. eine vorbeifahrende Straßenbahn, ein Bagger, oder unterschiedliche Hörsituationen, bspw. in einem Cafe, in einem Bus, an einer Straße, die jeweils auseinandergehalten gehalten werden sollen, angeboten. Hat der Nutzer eine vorgegebene Anzahl von Levels abgeschlossen wird sein Eignungswert zweckmäßigerweise erhöht (bspw. in Abhängigkeit seines Gesamtprozentsatzes an richtigen Antworten) und/oder als hinreichend hoch aufgefasst.

Vorzugsweise wird zusätzlich oder optional alternativ (zu der vorstehend genannten erforderlichen Mehrzahl) eine unbekannte akustische Situation erst dann als bekannte Hörsituation (bzw. als Beispiel für eine solche) in die Trainingsdaten eingefügt, wenn eine vorgegebene Anzahl von Nutzern mit einer jeweils einen Zielwert überschreitenden Eignungswert eine übereinstimmende Angabe zur Signalquelle dieses Signals getätigt hat. Dieser Zielwert ist dabei optional höher als der vorstehend genannte vorgegebene Wert, ab dem einem Nutzer überhaupt erst das für die unbekannte Hörsituation charakteristische Signal dargeboten wird. Dadurch können Antworten unterschiedlicher Nutzer also optional auch gewichtet (insbesondere in Abhängigkeit ihres Eignungswerts) werden.

In einer zweckmäßigen Verfahrensvariante werden die Angaben des oder des jeweiligen Nutzers der vorstehend beschriebenen oder einer zusätzlichen zentralen Datenbank zugeführt und von einem auf dieser Datenbank implementierten Algorithmus insbesondere hinsichtlich des Eignungswerts ausgewertet. Die Ermittlung, ob der jeweilige Nutzer geeignet für die potentielle Identifikation der unbekannten akustischen Situation ist, insbesondere ob sein Eignungswert entsprechend hoch aufzufassen ist, erfolgt somit zentral. Dies ist insbesondere dann zweckmäßig, wenn das vorstehend beschriebene Programm (bspw. das Spiel) als "online-Programm" (bspw. also als "online-Spiel") ausgelegt ist, das von der Datenbank mit entsprechenden (zunächst bekannten) "Hörbeispielen" versorgt wird.

Alternativ wird insbesondere mittels des vorstehend beschriebenen Programms "offline" der Eignungswert ermittelt, bspw. indem die bekannten Hörbeispiele des Programms als Paket beigefügt sind. Bei hinreichend hohem Level baut das Programm dann - optional nach Einholung eines Einverständnisses des Nutzers - zweckmäßigerweise eine Verbindung mit der Datenbank auf zum Abruf des oder wenigstens eines für eine unbekannte akustische Situation charakteristischen Signals - gegebenenfalls mit von der Datenbank optional anhand einer ersten Klassifikation erstellten Vorschlägen für Signalquellen.

In einer zweckmäßigen Verfahrensvariante werden der oder der jeweiligen vorstehend beschriebenen Aufnahme der realen Situation Metadaten zugeordnet. Diese Metadaten enthalten insbesondere Informationen über eine vom Klassifikator zugeordnete Hörsituation, eine aktuelle Position des Hörgeräts (insbesondere mittels eines Positionssensors ermittelt), einen Hintergrundgeräusch-Pegel, optional ein daraus abgeleitetes Signal-Rausch-Verhältnis, einen Schätzwert für einen Abstand zu einer Schallquelle, ein Herstellungsdatum des Hörgeräts und/oder einer Betriebssoftware des Hörgeräts sowie zusätzlich oder alternativ eine Anzahl von zur Aufnahme eingesetzten Mikrofonen (sowie gegebenenfalls deren Alter). Optional enthalten diese Metadaten zusätzlich oder alternativ auch Informationen über ein während der Aufnahme erfolgtes noise cancelling, ein own voice processing oder dergleichen.

In einer bevorzugten Verfahrensvariante wird die oder die jeweilige Aufnahme der realen Situation vor deren Darbietung als für die unbekannte akustische Situation charakteristisches Signal außerdem standardisiert. Dadurch wird insbesondere für den Fall, dass dem Nutzer mehrere unbekannte akustische Situationen dargeboten werden sollen, eine möglichst hohe Einheitlichkeit der unterschiedlichen Darbietungen ermöglicht. Zweckmäßigerweise wird die oder die jeweilige Aufnahme aber auch verworfen, d. h. insbesondere gelöscht, falls diese Aufnahme nicht den vorgegebenen Standards entspricht und auch nicht standardisiert werden kann.

In einer zweckmäßigen Weiterbildung wird im Rahmen der vorstehend beschriebenen Standardisierung die oder die jeweilige Aufnahme (Snippet) hinsichtlich ihrer (zeitlichen) Länge und/oder ihres Datenformats an ein Sollformat angeglichen. Bspw. wird in letzterem Fall, optional auf der entsprechenden zentralen Datenbank die Aufnahme in ein Datenformat gewandelt, dass von allen Endgeräten gleichermaßen verarbeitet werden kann, vorzugsweise plattformunabhängig ist. Als Länge für die jeweilige Aufnahme wird bspw. eine zeitliche Dauer zwischen 2 und 10, insbesondere etwa 3 bis 7 Sekunden herangezogen.

In einer weiteren zweckmäßigen Weiterbildung wird im Rahmen der vorstehend beschriebenen Standardisierung auf Basis der Metadaten (bspw. dem abgeleiteten Signal-Rausch-Verhältnis, dem Schätzwert für einen Abstand zu einer Schallquelle, der Länge der Aufnahme, einem Verstopfungsgrad des oder der Mikrofone, dem Alter der Mikrofone und/oder dergleichen) der oder der jeweiligen Aufnahme (also dem Snippet) ein Qualitätswert zugewiesen. Vorzugsweise wird hierbei nur eine Aufnahme mit einem hinreichend hohen Qualitätswert dem oder dem jeweiligen Nutzer dargeboten. Bspw. können hierdurch vergleichsweise "unbrauchbare" oder "unkenntliche" Aufnahmen, bspw. aufgrund einem jegliches Nutzsignal überdeckenden Hintergrundrauschen, einem hohen Verstopfungsgrad des oder der Mikrofone, wodurch ebenfalls kaum nutzbare Information in der Aufnahme enthalten ist, oder dergleichen, bereits vor einer Darbietung verworfen werden. Dies kann insbesondere bei der vorstehend beschriebenen Anwendung von Gamifikation die Motivation des Nutzers zur weiteren Teilnahme erhalten oder hinreichend hoch gehalten werden, da dieser nicht vor (zumindest subjektiv) unlösbare Aufgaben gestellt wird. Die Zuweisung des Qualitätswerts erfolgt vorzugsweise mittels eines selbstlernenden Algorithmus, der vorzugsweise auf der entsprechenden zentralen Datenbank abgearbeitet wird. Optional erfolgt hierbei eine Auswahl in mehreren Schritten oder "Ebenen" mittels jeweils eines entsprechend angepassten oder eingelernten selbstlernenden Algorithmus, indem Schritt für Schritt mittels jeweils "empfindlicheren" oder präziseren Algorithmen unbrauchbare Aufnahmen aussortiert werden.

In einer wiederum weiteren zweckmäßigen Weiterbildung der vorstehen beschriebenen Standardisierung werden - zusätzlich oder alternativ - mehrere Aufnahmen hinsichtlich ihres akustischen Inhalts verglichen und Aufnahmen mit hinreichend ähnlichem akustischen Inhalt gruppiert. Anders ausgedrückt, werden vorzugsweise mehrere Gruppen von Aufnahmen, die ähnlich klingen, gebildet. In einer einfachen Variante wird diese Gruppierung bspw. anhand der originalen Klassifikation durch den hörgeräteseitigen Klassifikator vorgenommen. Zu Steigerung der Präzision werden zusätzlich oder alternativ bspw. Mustererkennungsverfahren (vorzugsweise auf der entsprechenden Datenbank) eingesetzt, die einen Vergleich des akustischen Inhalts verschiedener Aufnahmen ermöglichen und vorzugsweise auch durchführen.

Bei dem vorstehend genannten Controller handelt es sich optional um einen zentralen Mikrocontroller. Vorzugsweise ist der Controller aber durch ein verteiltes System gebildet, bspw. über eine oder gegebenenfalls mehrere Datenbanken und das Endgerät, wobei auf der entsprechenden Datenbank insbesondere die Angaben der Nutzer ausgewertet und die Trainingsdaten für den Klassifikator erstellt werden. Auf dem Endgerät läuft dabei vorzugsweise die vorstehend beschriebene Software-Applikation ab oder ist zumindest auf diesem lauffähig installiert.

Vorzugsweise umfasst das Hörsystem (insbesondere als eines von mehreren Endgeräten) ein Hörgerät mit einem Signalprozessor, auf dem vorzugsweise der vorstehend beschriebene Klassifikator insbesondere in Form eines (selbstlernenden und trainierten) Algorithmus implementiert ist.

In einer alternativen Ausführung umfasst das Hörsystem einen zentralen Klassifikator, der insbesondere als "Cloud-Klassifikator" ausgebildet und vorzugsweise auf der vorstehend genannten zentralen Datenbank oder gegebenenfalls auch einer weiteren zentralen Datenbank implementiert ist. In diesem Fall sendet das Hörgerät vorzugsweise in vorstehend beschriebener Weise eine Aufnahme (insbesondere mit den Metadaten) an den Cloud-Klassifikator. Von diesem wird - unter Nutzung von regelmäßig gegenüber dem Hörgerät umfangreicheren Systemressourcen (insbesondere Rechenleistung und/oder Rechenspeicher) - die Aufnahme analysiert und ein Klassifikationsergebnis zurück an das Hörgerät übermittelt.

Im Rahmen einer hinsichtlich des Datenschutzes vorteilhaften Verfahrensvarianten werden außerdem Snippets, in denen Sprache enthalten ist, insbesondere gesprochene Worte und/oder die Stimme einer Person erkennbar sind, verworfen oder optional auch der Sprachanteil entfernt.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einer schematischen Ansicht ein Hörsystem, und
- Fig. 2: in einem schematischen Ablaufdiagramm ein von dem Hörsystem durchgeführtes Verfahren.

Einander entsprechende Teile sind in allen Figuren stets mit gleichen Bezugszeichen versehen.

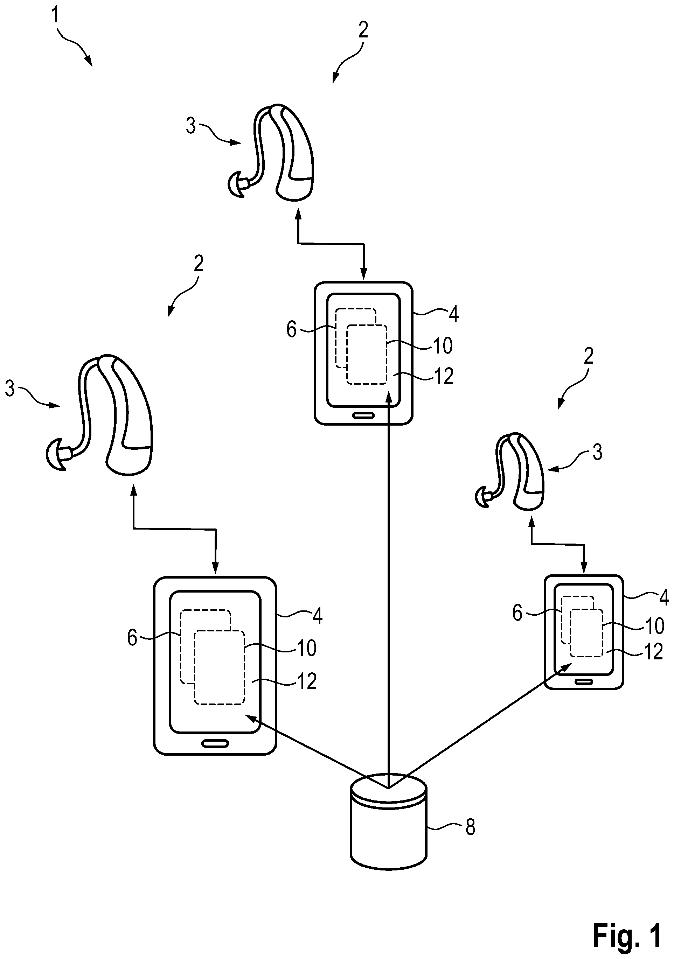

In Fig. 1 ist schematisch ein Hörsystem 1 dargestellt. Das Hörsystem 1 umfasst dabei mehrere individuelle, das heißt jeweils einem Hörgeräteträger (oder: Nutzer, nicht näher dargestellt) zugeordnete Teilsysteme 2. Jedes Teilsystem 2 weist dabei wenigstens ein Hörhilfegerät, kurz als "Hörgerät 1" bezeichnet, und ein Mobilgerät, hier jeweils als Smartphone 4 dargestellt, auf. Das jeweilige Smartphone 4 bildet dabei ein Endgerät des jeweiligen Hörgeräteträgers und ist zur bidirektionalen Kommunikation mit dem jeweiligen Hörgerät 3 eingerichtet. Im bestimmungsgemäßen Betrieb ist das jeweilige Hörgerät 3 auch mit seinem zugeordneten Smartphone 4 verbunden.

Auf dem jeweiligen Smartphone 4 ist außerdem eine Steuerungsapplikation (kurz: "Steuer-App" 6) installiert, mittels derer bspw. Einstellungen am Hörgerät 3 vorgenommen werden können - bspw. Lautstärke verändern und/oder Hörprogramme wechseln.

Das Hörsystem 1 weist außerdem wenigstens eine zentrale Datenbank 8 auf, die dazu eingerichtet ist, - insbesondere über das Internet - mit dem jeweiligen Smartphone 4 des jeweiligen Teilsystems 2 zu kommunizieren. Die Datenbank 8 stellt dabei Informationen zu dem jeweiligen Hörgerät 3, bspw. auch Updates für Firmware sowie auch die Steuer-App 6 zum Download bereit.

In einem optionalen Ausführungsbeispiel ist auf der Datenbank 8 ein Hörsituationen-Klassifikator (kurz: "Klassifikator") implementiert, so dass für die Teilsysteme 2 des Hörsystems 1 eine zentrale Klassifikation erfolgen kann. In diesem Fall senden die Hörgeräte 3 via die Smartphones 4 Daten zu vorliegenden akustischen Situationen an die Datenbank 8. Der dortige Klassifikator analysiert diese Daten und sendet ein Klassifikationsergebnis, konkret eine erkannte, d. h. hinterlegte und anhand von Beispielen "angelernte" oder trainierte Hörsituation - der wiederum ein auf dem Hörgerät 3 hinterlegtes Hörprogramm zugeordnet ist - an das Smartphone 4 zurück. In einfacher Ausführung gibt das Smartphone 4 diese Hörsituation an das Hörgerät 3 weiter und letzteres stellt seine Signalverarbeitung auf die erkannte Hörsituation um (wechselt das Hörprogramm, bspw. von einem Hörprogramm "Gespräch" in ein Hörprogramm "Fernsehen"). Alternativ sendet die Datenbank 8 mehrere, für die erkannte Hörsituation mögliche "Programmvorschläge" an das Smartphone 4 (bspw. "Einzelunterhaltung", "Fernsehen", "Musikhören"), so dass der jeweilige Hörgeräteträger ein für ihn geeignet erscheinendes Hörprogramm auswählen kann. Dieses wird dann an das Hörgerät 3 gesendet.

In einem alternativen Ausführungsbeispiel ist der vorstehend beschriebene Klassifikator in jedem Hörgerät 3 separat implementiert. Die Klassifikation der aktuellen akustischen Situation wird in diesem Fall also lokal (oder auch: "offline", da keine Verbindung zur Datenbank 8 erforderlich ist) durchgeführt.

Zur Unterhaltung des jeweiligen Hörgeräteträgers werden von der Datenbank auch Software- insbesondere Spiele-Applikationen, insbesondere mit dem Hören an sich in Verbindung stehende Spiele angeboten, d. h. zum Download bereitgestellt. Diese Spiele sind dazu insbesondere zum spielerischen Hörtraining oder auch Hörtest vorgesehen und ausgebildet. Im dargestellten Ausführungsbeispiel ist eine solche Spiele-Applikation (kurz: Spiele-App 10) auf jedem der dargestellten Smartphones 4 installiert. Diese Spiele-App 10 ist auch zum Hörtraining vorgesehen.

Dazu werden im Spielverlauf dem jeweiligen Hörgeräteträger - im dargestellten Ausführungsbeispiel mittels des jeweiligen Hörgeräts 3 - Aufnahmen vorgespielt (d. h. akustische Signale dargeboten), die der Hörgeräteträger identifizieren muss. Dazu werden dem Hörgeräteträger auch Lösungsvorschläge (konkret eine richtige Lösung und wenigstens eine alternative aber "falsche" Antwort) am Display 12 des entsprechenden Smartphones 4 zur Auswahl angezeigt. Erkennt der Hörgeräteträger den Inhalt der Aufnahme (bspw. das Geräusch einer Trommel) richtig, wird in der nächsten "Runde" oder einem höheren Level (bspw. erst nach mehreren richtigen Antworten) der Schwierigkeitsgrad erhöht. Bspw. ist der akustische Inhalt der Aufnahme komplexer (bspw. zwei Instrumente) und/oder die Lösungsvorschläge sind "leichter" mit der richtigen Lösung zu verwechseln.

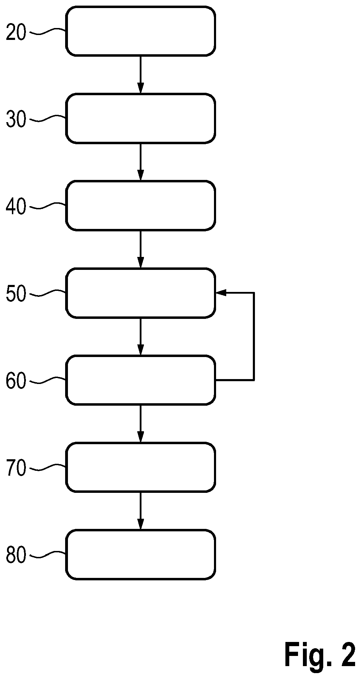

Um, für den Fall einer für den entsprechenden Hörgeräteträger nicht zufriedenstellenden Klassifikation der aktuellen akustischen Situation oder falls der Klassifikator die Situation nicht mit hinreichender Wahrscheinlichkeit einer hinterlegten Hörsituation zugeordnen kann, ein nachträgliches Einlernen einer solchen im Folgenden als "unbekannt" bezeichneten akustischen Situation zu ermöglichen, wird von dem Hörsystem 1 ein im Folgenden anhand von Fig. 2 näher dargestelltes Verfahren durchgeführt.

Stellt der Hörgeräteträger fest, dass die vom Klassifikator vorgegeben Hörsituation und die mit dem zugeordneten Hörprogramm verbundenen Einstellungen nicht zu einem subjektiv befriedigenden Klangeindruck führen, und verändert deshalb Hörgeräteeinstellungen (bspw. Lautstärke oder das Hörprogramm) am Hörgerät 3 selbst oder in der Steuer-App 6, oder gibt der der Klassifikator selbst einen hohen Wahrscheinlichkeitswert für eine Fehlklassifikation (oder entsprechend umgekehrt einen unterhalb eines Grenzwerts liegenden Wahrscheinlichkeitswert für das Vorliegen einer bekannten Hörsituation) an, wird in einem ersten Verfahrensschritt 20 eine Aufnahme der aktuellen akustischen Situation getriggert. Dabei wird zunächst ohnehin mittels wenigstens eines Mikrofons des entsprechenden Hörgeräts 3 fortlaufend über gleitende Zeitfenster eine Aufnahme der aktuellen akustischen Situation zwischengespeichert. Bei Ausbleiben des Triggers wird die Aufnahme allerdings wieder verworfen. Bei Triggerung hingegen wird die Aufnahme über das aktuelle Zeitfenster (d. h. für einen Zeitraum vor der Triggerung und nach der Triggerung) als "Snippet" gespeichert und über das Smartphone 3, konkret die Steuer-App 6 an die Datenbank 8 gesendet. Dabei werden der jeweiligen Aufnahme Metadaten beigefügt, die das Signal-Rausch-Verhältnis, ein Alter des Hörgeräts und des bzw. der Mikrofone, die Anzahl der zur Aufnahme eingesetzten Mikrofone sowie das Ergebnis der Klassifikation enthalten.

In der Datenbank 8 wird die Aufnahme (also das Snippet) in einem nachfolgenden Verfahrensschritt 30 standardisiert, d. h. sofern erforderlich in ein für alle am Hörsystem 1 angebundenen Hörgeräte 3 verarbeitbares Datenformat transformiert und anhand der mit den Metadaten übermittelten Klassifikation in Gruppen mit anderen Aufnahmen einsortiert. Zudem wird anhand des Signal-Rausch-Verhältnisses und dem Alter des bzw. der Mikrofone ein Qualitätswert ermittelt. Unterschreitet dieser Qualitätswert (bspw. aufgrund eines nicht vorhandenen oder kaum zu ermittelnden Nutzsignal-Anteil) einen vorgegebenen Wert wird die Aufnahme von der Datenbank verworfen.

Ist der Qualitätswert hinreichend hoch, wird die Aufnahme als akustisches Signal in einem weiteren Verfahrensschritt 40 zum Abruf durch die Spiele-App 10 bereitgestellt.

Spielt ein Hörgeräteträger die Spiele-App 10 auf seinem Smartphone 4, werden ihm in vorstehend beschriebener Weise zunächst ein akustisches Signal für eine bekannte akustische Situation dargeboten (Verfahrensschritt 50) und anschließend in einem Verfahrensschritt 60 eine Angabe zum Inhalt des akustischen Signals (also der dargebotenen Aufnahme) abgefragt. Unter vorstehend beschriebener Steigerung des Schwierigkeitsgrads werden die Verfahrensschritte 50 und 60 im Rahmen der Spiele-App 10 wiederholt. Dabei wird mit entsprechendem Fortschritt des Spiels seitens der Spiele-App 10 (oder auch seitens der Datenbank 8) ein Eignungswert dieses Hörgeräteträgers erhöht. Ist dieser Eignungswert hinreichend hoch (liegt bspw. der Anteil richtiger Antworten bei oder über 85 Prozent), wird dem Hörgeräteträger in einem Verfahrensschritt 70 ein "Sonderlevel" angeboten, in dem dem Hörgeräteträger die aktive Mitwirkung am Training der Klassifikatoren in Aussicht gestellt wird.

Nimmt der Hörgeräteträger dieses Angebot an, wird ihm zumindest eine der Aufnahmen der unbekannten akustischen Situationen vorgespielt. Optional wird dem Hörgeräteträger dabei eine freie Eingabemaske für seine Einschätzung der akustischen Situation oder auch mögliche Antworten angeboten. Die Antwort des Hörgeräteträgers wird in der Datenbank 8 hinterlegt.

Erreicht eine ausreichend hohe Anzahl, konkret eine vorgegebene Anzahl von Hörgeräteträgern (bspw. 100, 500, 1000 oder mehr) einen entsprechend hohen Eignungswert und gibt im Folgenden eine Antwort zu derselben unbekannten akustischen Situation ab, werden diese Antworten zu der jeweiligen unbekannten akustischen Situation von der Datenbank verglichen. Überschreitet ein Prozentsatz oder eine absolute Zahl gleicher Antworten einen vorgegebenen Wert, hinterlegt die Datenbank die entsprechende Aufnahme in einem Verfahrensschritt 80 als bekannte akustische Situation für eine zusammen mit der durch die Antworten gebildete Hörsituation oder ordnet aufgrund der übereinstimmenden Antworten die Aufnahme einer bereits bestehenden Hörsituation als weiteres Trainingsbeispiel zu. Somit werden die Trainingsdaten für die Klassifikatoren mittels realer Situationen aktualisiert. Anschließend werden derart neu ermittelte Trainingsbeispiele oder neue Hörsituationen (in letzterem Fall unter vorheriger Erarbeitung eines zugeordneten Hörprogramms vorzugsweise durch entsprechende Entwickler) im Rahmen der aktualisierten (angepassten) Trainingsdaten zum Training der Klassifikatoren herangezogen. Für bereits trainierte Klassifikatoren werden die aktualisierten Trainingsdaten im Rahmen eines Updates verwendet.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden.

### Bezugszeichenliste

- 1: Hörsystem
- 2: Teilsystem
- 3: Hörgerät
- 4: Smartphone
- 6: Steuer-App
- 8: Datenbank
- 10: Spiele-App
- 12: Display
- 20: Verfahrensschritt
- 30: Verfahrensschritt
- 40: Verfahrensschritt
- 50: Verfahrensschritt
- 60: Verfahrensschritt
- 70: Verfahrensschritt
- 80: Verfahrensschritt

## Patentansprüche

1. Verfahren zum Trainieren eines Hörsituationen-Klassifikators für ein Hörgerät (3), wobei verfahrensgemäß
- mittels eines Endgeräts (3,4) einem Nutzer eine Anzahl von akustischen Signalen dargeboten wird,
- der Nutzer aufgefordert wird, zu dem oder dem jeweiligen dargebotenen Signal eine Angabe zur Signalquelle zu tätigen,
- in Abhängigkeit von der nutzerseitigen Angabe zu dem dargebotenen Signal oder einem der gegebenenfalls mehreren dargebotenen Signale Trainingsdaten für den Hörsituationen-Klassifikator angepasst und der Hörsituationen-Klassifikator mittels der Trainingsdaten aktualisiert wird.

2. Verfahren nach Anspruch 1,
wobei das dargebotene Signal oder eines der gegebenenfalls mehreren dargebotenen Signale ein charakteristisches Signal für eine für den Hörsituationen-Klassifikator unbekannte akustische Situation bildet.

3. Verfahren nach Anspruch 2,
wobei das für die unbekannte akustische Situation charakteristische Signal eine Aufnahme einer realen Situation umfasst.

4. Verfahren nach Anspruch 3,
wobei die Aufnahme der realen Situation vorgenommen wird, wenn ein Hörgeräteträger eine für eine Unzufriedenheit mit einer durch den Hörsituationen-Klassifikator vorgenommenen Einstellung charakteristische Eingabe tätigt und/oder wenn der Hörsituationen-Klassifikator der realen Situation nur mit einem einen Grenzwert unterschreitenden Wahrscheinlichkeitswert eine trainierte Hörsituation zuordnen kann.

5. Verfahren nach einem der Ansprüche 2 bis 4,
wobei das für die unbekannte akustische Situation charakteristische Signal in einer zentralen Datenbank (8) hinterlegt und von dieser zentralen Datenbank (8) aus zur Darbietung bereitgestellt wird.

6. Verfahren nach einem der Ansprüche 2 bis 5,
wobei die unbekannte akustische Situation auf die getätigte Angabe zur Signalquelle hin als bekannte Hörsituation in die Trainingsdaten eingefügt wird.

7. Verfahren nach Anspruch 6,
wobei das für die unbekannte akustische Situation charakteristische Signal einer Vielzahl von Nutzern dargeboten wird und die unbekannte akustische Situation erst dann als bekannte Hörsituation in die Trainingsdaten eingefügt wird, wenn eine vorgegebene Mehrzahl von Nutzern eine übereinstimmende Angabe zur Signalquelle dieses Signals getätigt hat.

8. Verfahren nach einem der Ansprüche 1 bis 7,
wobei dem oder dem jeweiligen Nutzer eine Vielzahl von akustischen Signalen von bekannten Signalquellen dargeboten und anhand der Angaben des Nutzers zu der dem jeweiligen Signal zugeordneten Signalquelle ein Eignungswert ermittelt wird, und wobei das für die unbekannte akustische Situation charakteristische Signal dem Nutzer nur dann dargeboten wird, wenn der für diesen Nutzer ermittelte Eignungswert einen vorgegebenen Wert überschreitet.

9. Verfahren nach einem der Ansprüche 1 bis 8,
wobei die Angaben des oder des jeweiligen Nutzers der oder einer zusätzlichen zentralen Datenbank (8) zugeführt und von einem auf dieser Datenbank (8) implementierten Algorithmus insbesondere hinsichtlich des Eignungswerts des oder des jeweiligen Nutzers ausgewertet werden.

10. Verfahren nach einem der Ansprüche 3 bis 9,
wobei der oder der jeweiligen Aufnahme der realen Situation Metadaten mit Informationen über eine vom Hörsituationen-Klassifikator zugeordneten Hörsituation, eine aktuelle Position des Hörgeräts, einen Hintergrundgeräusch-Pegel, einen Schätzwert für einen Abstand zu einer Schallquelle, ein Herstellungsdatum des Hörgeräts (3) und/oder einer Betriebssoftware und/oder eine Anzahl von zu Aufnahme eingesetzten Mikrofonen zugeordnet wird.

11. Verfahren nach einem der Ansprüche 3 bis 10,
wobei die oder die jeweilige Aufnahme der realen Situation vor der Darbietung als für die unbekannte Hörsituation charakteristisches Signal standardisiert wird.

12. Verfahren nach Anspruch 11,
wobei im Rahmen der Standardisierung die oder die jeweilige Aufnahme hinsichtlich ihrer Länge und/oder ihres Datenformats an ein Sollformat angeglichen werden.

13. Verfahren nach Anspruch 11 oder 12,
wobei im Rahmen der Standardisierung auf Basis der Metadaten der oder der jeweiligen Aufnahme ein Qualitätswert zugewiesen wird, und wobei nur eine Aufnahme mit einem hinreichend hohen Qualitätswert dem oder dem jeweiligen Nutzer dargeboten wird.

14. Verfahren nach einem der Ansprüche 11 bis 13,
wobei mehrere Aufnahmen hinsichtlich ihres akustischen Inhalts verglichen und Aufnahmen mit hinreichend ähnlichem akustischen Inhalt gruppiert werden.

15. Hörsystem (1), umfassend wenigstens ein Endgerät (3,4), einen Hörsituationen-Klassifikator und einen Controller, dazu eingerichtet das Verfahren gemäß einem der Ansprüche 1 bis 14 durchzuführen.

16. Hörsystem (1) nach Anspruch 15, umfassend ein Hörgerät (3) mit einem Signalprozessor, auf dem der Hörsituationen-Klassifikator implementiert ist.
